# EUROPEAN PATENT APPLICATION

(11) **EP 2 641 468 A1**
(43) Date of publication of application: **25.09.2013**
(21) Application number: 13075018.5
(22) Date of filing: 07.03.2013
(51) Int. Cl.: A01K 1/015

(54) **Floor element for a pig stable**

(30) Priority: 19.03.2012 NL 1039478
(71) Applicant: Bulte, Gerrit, 7035 CE Netherlands (NL); Van Schriek, John, 7039 CA Stokkum (NL)
(72) Inventor: Bulte, Gerrit, 7035 CE Netherlands (NL); Van Schriek, John, 7039 CA Stokkum (NL)
(74) Representative: Lips, Hendrik Jan George

(57) **Abstract**

Floor element for a pig stable, manufactured from concrete either from a composite material, said element (1) being provided with at least one slot (4,4A) near at least one of the outer edges (2) of said element. Said slot (4,4A) is having a width of 7 up to 15 cm and in particular of 8 up to 10cm. The distance of the outer edga (5) of said slot (4,4A) till the place where, in the active position of said floor element (1) this will engage a wall, is in the size of 5 up to 15 cm. The top surface (6) of said element will extend obliquely upward towards the outer edge (2) of said element. In the top surface (10) of said element (1) at leasr one insert (11) is provided just near said slot (4,4A), said insert (11) preferably being in the shape of a grid and below said grid een opening (12) can be provided in said element. Said floor element (1) might be provided with means for mounting a gutter beneath said element.

## Description

The invention relates to a floor element for a pig stable, said element comprising at least an impenetrable portion.

In case of the known pig stables the floor elements, at least partial, are formed by grids, such that the excrements, given off by a pig, can easely be removed and the surface of the floor is minimal poluted. Polution, however, cannot be completely prevented.

It has appeared, however, that a pig is a clean animal and will not soil its own place where it can eat, rest and play. Generally speaking a pig will turn its back-part towards a wall for dropping its excrements.

Now the object of the invention is to make use of this practice and to that end provides for, that near at least one of the outer edges of the further substantially closed floor element a slot is present.

Preferably said slot will have a width of 7 up to 15 cm and in particular of 8 up to 10 cm.

The distance of the outer edge of said slot up to the place where, in the active position of said floor element it will engage a wall, will be in the size of 5 up to 15 cm.

In particular the top surface of said floor element, extending from the outer edge of said slot, will extend obliquely upward, towards the outer edge of said floor element, such that it is substantially assured that the excrements will land in said slot and will be removed through this.

As in case of a floor element according to the invention, the excrements are removed via said slot, it is possible to position a gutter below said slot, such that the excrements can be moved to a suitable place. So it is not necessary to position a tank beneath the complete floor of the pig stable, as this is necessary when grid floors are used.

To obtain a sufficient strong connection between the closed part of said floor element and the part of said floor element lying outside said slot, locally a connecting piece between said parts can be provided. This will depend on the length of said slot and the dimensions of said parts.

The construction of the stable can be made more simple because the floor elements can be manufactured from concrete either from a composite material.

The mould in which a floor element is poured will be in the shape of the top surface of said element and, as seen in the position when the concrete or the composite material is poured, will be provided with upwardly extending parts, for shaping said slot either slots.

Further mounting elements can be placed in said mould, which afterwards can be used for connecting a gutter to said floor element.

It will be obvious that in most cases a floor element will have a longitudinal shape, in which said slot will be provided near a short side either near both short sides of said element.

However, it is also possible to provide a slot along the longitudinal side either along both sides. This will depend on the construction of the stable as such.

For taking care that a pig will move towards a slot when this is necessary, it is recommendable that the top surface of said floor element is provided with at least one insert just near said slot, said insert preferably having the shape of a grid.

To prevent that said grid either the room below it, will be polluted, said floor element is provided with an opening below said insert, said opeming might be connected to the gutter being present below said slot.

The invention is further elucidated with the help of embodiments, shown in the accompanying drawing, in which:
Fig. 1 shows a plan view of a floor element according to the invention;
Fig. 2 shows a section, on a lager scale, of a part of the floor element of fig. 1 according to the line II-II in this figure;
Fig. 3 shows a plan view of an other embodiment of a floor element according to the invention, and
Fig. 4 shows a section,on a larger scale, of a part of the floor element of fig. 3 according to the line IV-IV in fig. 3

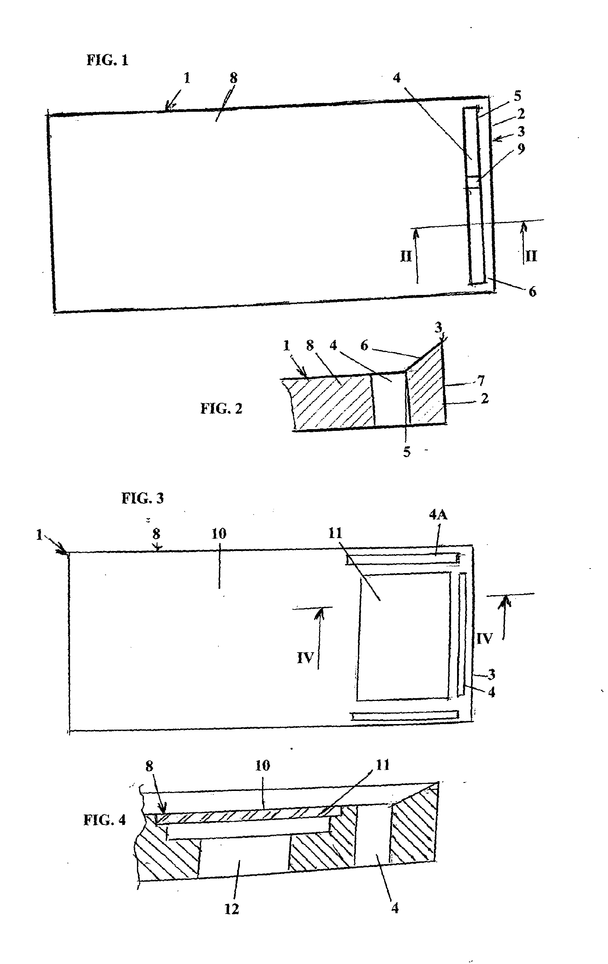

Fig. 1 shows a floor element 1, which near the outer edge 2 of the cross side 3 is provided with the slot 4.

As in particular appears from fig. 2 the plane 6 of said element 1 extends from the outer edge 5 of said slot 4, obliquely upwards, such that said plane 6 will engage a wall, not shown, when said floor ewlement is positioned at its place in a pig stable. Possibly the end surface of said floor element can be executed step wise, so that it might engage the wall in another way.

To obtain a strong connection between the part 8 of said floor element1 and the part outside said slot 4, locally a connecting piece 9 can be positioned between these parts.

In case of the embodiment, shown in the figures 3 and 4, it is remarked that the parts, corresponding with those in the previous embodiment, are indicated with the same reference numbers.

Now the floor element 1 is provided with a slot 4 along the cross side 3 and with a slot 4A along both longitudinal sides

In the top surface 10 of the part 8 an insert 11 is mounted, which might be in the shape of a grid.. Below said grid 11 the part 8 is provided with an opening 12, which in a not indicated way can be connected to a not shown gutter below the slot 4, either the slots 4A.

It will be obvious that the top surface 10 of the floor element can be executed in a suitable way, either can be provided with a specific coating and possibly an isolating layer can be present in said floor element. As indicated in fig. 1 a slot can be devided in parts and as well the grid 11 can be devided in parts and more than one opening 12 can be present.

Further it will be obvious too that only two embodiments of a floor element according to the invention are described above and are shown in the drawing and that many modifications can be made without leaving the scope of the invention as this is described in the appended claims.

## Claims

1. Floor element for a pig stable, said element comprising at least an impenetrable portion (8), **characterized in that**, near at least one of the outer edges (2) of the further closed floor element (1) a slot (4, 4A) is present.

2. Floor element according to claim 1, **characterized in that** said slot (4,4A) is having a width of 7 up to 15 cm and in particular of 8 up to 10 cm.

3. Floor element according to claim 1 or 2, **charaterized in that** the distance of the outer edge (5) of the slot (4,4A) till the place where, in the active position of said floor element (1) said floor element will engage a wall, is in the size of 5 up to 15 cm.

4. Floor element according to one or more of the preceding claims, **characterized in that** the top surface (6) of said floor element (1), extending from the outer edge (5) of said slot (4,4A) will extend obliquely upward towards the outer edge (2) of said floor element.

5. Floor element according to one or more of the preceding claims, **characterized in that** means are provided for mounting a gutter beneath said floor element.

6. Floor element according to one or more of the preceding claims, **characterized in that** a connecting piece (9) is provided in said slot (4,4A) for connecting the closed part (8) of said floor element to the part lying outside said slot (4,4A).

7. Floor element according to one or more of the preceding claims, **characterized in that** said element is manufactured from concrete either from a composite material.

8. Floor element according to one or more of the preceding claims, **characterized in that** in the top surface (10) of the element at least one insert (11) is provided just near said slot (4,4A), said insert preferably being in the shape of a grid.

9. Floor element according to claim 8, **characterized in that** below said grid (11) an opening (12) is provided in said floor element.

## Amended claims

### Amended claims in accordance with Rule 137(2) EPC.

**1.** Floor element for a pig staable, said element comprising at least an impenetrable portion and a slot along an outer edge of said element, **characterized in that** besides at least one slot extending along an outer edge of said floor element the other part of said element is substantially free from slots such that it is sufficient to position a gutter below said slot only.
